# EUROPÄISCHE PATENTSCHRIFT

(11) **EP 0 946 788 B1**
(45) Veröffentlichungstag und Bekanntmachung des Hinweises auf die Patenterteilung: **25.07.2001**
(21) Anmeldenummer: 97951917.0
(22) Anmeldetag: 19.11.1997
(51) Int. Cl.: C23F 11/14, E21B 41/02

(54) **VERFAHREN ZUM SCHUTZ VON METALLOBERFLÄCHEN GEGENÜBER KORROSION IN FLÜSSIGEN ODER GASFÖRMIGEN MEDIEN**
METHOD FOR PROTECTING METAL SURFACES AGAINST CORROSION IN LIQUID OR GASEOUS MEDIA
PROCEDE DE PROTECTION DE SURFACES METALLIQUES CONTRE LA CORROSION DUE AU CONTACT AVEC DES SUBSTANCES LIQUIDES OU GAZEUSES

(30) Priorität: 28.11.1996 DE 19649285
(43) Veröffentlichungstag der Anmeldung: 06.10.1999
(73) Patentinhaber: Cognis Deutschland GmbH, 40589 Düsseldorf (DE)
(72) Erfinder: BREUER, Wolfgang, D-41352 Korschenbroich (DE); SCHÜTZ, Robert, D-47918 Tönisvorst (DE); UPHUES, Günther, D-40789 Monheim (DE); HEROLD, Claus-Peter, D-40822 Mettmann (DE); PI, Rafael, E-08400 Ganollers (ES)
(86) Internationale Anmeldenummer: EP9706451
(87) Internationale Veröffentlichungsnummer: WO9823792

(56) Entgegenhaltungen:
- EP-A- 0 320 769
- EP-A- 0 446 616
- GB-A- 1 207 616
- US-A- 2 659 693
- US-A- 2 745 809
- US-A- 4 270 001
- US-A- 4 299 982

## Beschreibung

Die Erfindung betrifft ein Verfahren zum Schutz von Metalloberflächen gegenüber Korrosion in flüssigen wäßrigen, beziehungsweise nichtwäßrigen oder gasförmigen Medien, sowie die Verwendung von bestimmten quaternierten Ammoniumverbindungen als Korrosionsinhibitoren.

Die Korrosion von Metallen in flüssigen oder gasförmigen Medien stellt ein seit langem bekanntes Problem dar. Insbesondere im Bereich des Erdreichaufschlußes, beispielsweise bei schwach sauren oder entlüfteten salinen wäßrigen Lösungen, wie sie bei der Förderung und Verarbeitung von Erdöl oder Erdgas anfallen, müssen die Metalloberflächen der verwendeten Anlagen gegen Korrosion geschützt werden. Erdöl und Erdgas bzw. das mitgeförderte Wasser enthalten korrosive Bestandteile, beispielsweise CO₂ oder H₂S und Salze welche zu einer starken Korrosion von Metalloberflächen führen.Weiterhin tragen auch die in diesem Bereich verwendeten Arbeitsflüssigkeiten, beispielsweise Bohrspülungen, zur Korrosion bei.

Zum Schutz vor Korrosion werden daher sogenannte Korrosionsinhibitoren verwendet, die den mit den Metalloberflächen in Kontakt tretenden Flüssigkeiten oder Gasen zugesetzt werden. Die Korrosionsinhibitoren bilden entweder einen Film auf der Metalloberfläche oder verringern den Korrosionsprozeß durch physikochemische Reaktionen auf der Metalloberfläche (vergl. P.H. Ogden, Chemicals in the Oil Industry, The Royal Society of Chemistry, 1991, Seiten 21-22 und O. Lahodny- 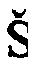 arc, Corrosions Inhibition in Oil and Gas Drilling and Production Operations, Eur. Fed. Corros., Publ. 1994, 11, Seiten 104-112).

Als Korrosionsinhibitoren sind bereits eine Vielzahl von üblicherweise stickstoffhaltigen Substanzen bekannt (O. Lahodny- 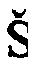 arc, Seiten 112-113). Mitzlaff et al. (Werkstoff und Korrosion, 40, 629-634 (1989)) beschreiben quaternäre Ammoniumverbindungen als Korrosionsinhibitoren für die Rohöl- und Erdgasförderung. Aus Phillips et al. (Proceedings of the 8th European Symposium on Corrosion Inhibitors, Suppl. N. 10, 1995, 1213-1227) sind bestimmte Betaine, wie zum Beispiel Kokosamidopropylverbindungen, für den gleichen Verwendungszweck beschrieben. Die EP 320 769 A2 offenbart ethoxylierte quaternierte Ammoniumverbindungen speziell für den Einsatz in W/O-Emulsionen, wie sie bei der Erdölförderung oder Erdölverarbeitung vorkommen.

In jüngerer Zeit müssen Korrosionsinhibitoren aber auch in Bezug auf ihre biologische Abbaubarkeit und aquatische Toxizität erhöhten Anforderungen genügen. Die EP 651 074 beschreibt in 2-Stellung substituierte N-Ethoxyimidazoline, die nicht nur eine gute korrosionsinhibierende Wirkung aufweisen, sondern gleichzeitig auch eine geringe aquatische Toxizität (EC₅₀ bei *Skeletonema costatum <* 1 ppm) zeigen.

Da sich die gesetzlichen Auflagen bezüglich der Umweltverträglichkeit gerade bei den bei der Erdöl- oder Erdgasproduktion eingesetzten Chemikalien weiter verschärfen, besteht aber nach wie vor der Wunsch Metalloberflächen, die korrosiven flüssigen oder gasförmigen Medien ausgesetzt sind, gegen Korrosion zu schützen, ohne dabei Substanzen zu verwenden, die nur eine geringe Umweltverträglichkeit zeigen.

Es wurde gefunden, daß bestimmte quaternierte Ammoniumverbindungen, die mindestens eine Estergruppe im Molekül enthalten, eine gute korrosionsinhibierende Wirkung zeigen, gut biologisch abbaubar sind und eine geringe aquatische Toxizität aufweisen.

Gegenstand der vorliegenden Erfindung ist daher ein Verfahren zum Schutz von Metalloberflächen gegen Korrosion in flüssigen wäßrigen beziehungsweise nichtwäßrigen oder gasförmigen Medien, indem den Medien Verbindungen der Formel (I) zugegeben werden, wobei in der Formel (I) 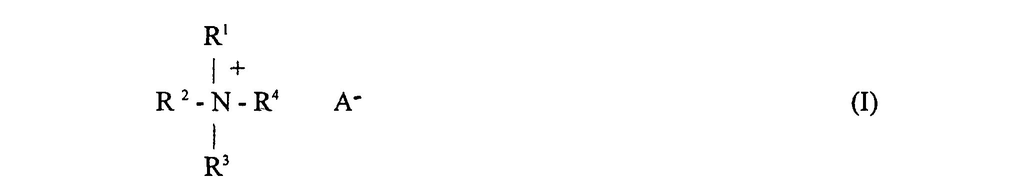 die Reste R¹, R² und R³ unabhängig voneinander für einen Alkyl- oder Hydroxyalkylrest mit 1 bis 4 C-Atomen, einen Aryl- oder Alkylarylrest oder einen Rest der Formel (II) 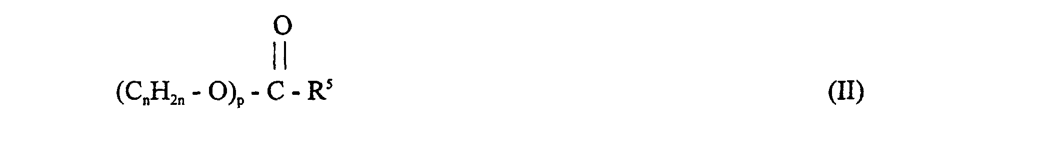 stehen,
A⁻ ein Anion ist, n eine Zahl von 2 oder 3, p eine Zahl von 1 bis 3 und R⁵ für einen Alkyl- oder Alkenylrest mit 7 bis 23 C-Atomen und 0, 1, 2 oder 3 Doppelbindungen steht,
und R⁴ für einen Rest der Formeln (II) oder (III) steht 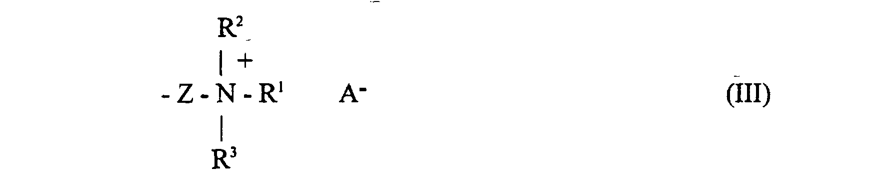 in der R¹, R² und R³ die obige Bedeutung haben und Z für eine Gruppe -(CH₂)ₘ- oder eine Gruppe der Formel (IV) steht 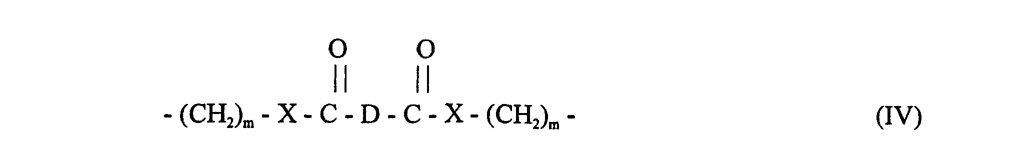 und m für eine ganze Zahl zwischen 1 und 6, X für eine Gruppe NH oder für Sauerstoff steht und D einen Dimerfettsäurerest mit durchschnittlich 36 bis 54 C-Atomen bedeutet.

Das erfindungsgemäße Verfahren wird vorzugsweise zum Schutz von Metalloberflächen, wie sie bei technischen Anlagen im Bereich der Erdreichbohrung, also beispielsweise bei Pipelines, Ventilen oder Förderrohren auftreten, gegen Korrosion in flüssigen wäßrigen, beziehungsweise nichtwäßrigen oder gasförmigen Medien eingesetzt. Diese Anlagen werden im allgemeinen aus Stahl hergestellt. Das erfindungsgemäße Verfahren kann aber auch zur Verhinderung der Korrosion bei anderen Metallen, beispielsweise Aluminium, Blei oder Kupfer bzw. Legierungen, die diese Metalle enthalten, verwendet werden.

Die Medien, denen die Metalle ausgesetzt sind, können flüssig oder gasförmig sein. Im Bereich des Erdreichaufschlußes tritt als gasförmiges Medium hauptsächlich Erdgas auf. Ein typisches flüssiges, nichtwäßriges Medien ist beispielsweise Rohöl. Typische wäßrige Medien enthalten vorzugsweise zwischen 10 und 90 Gew.-% Wasser, wobei im Bereich der Erdöl- bzw. Erdgasproduktion auch Wässer vorliegen können, die Salzgehalte von 0,2 % bis zur Sättigung aufweisen und daher Metalloberflächen stark korrodieren lassen. Es können aber auch rein wäßrige Medien vorliegen, beispielsweise beim Erbohren von Trinkwasserbrunnen. Häufig liegen als Medium auch Wasser/Öl-Mischungen oder Emulsionen vor, welche beispielsweise als Bohrspülungen eingesetzt werden, wobei deren Ölanteil bis zu 99 Gew.-% ausmachen kann. Als Ölphase werden neben Rohöl auch umweltverträgliche organische Ester, wie sie beispielsweise in der EP 374 671 A1, EP 374 672 A1 oder der EP 386 636 A1 beschrieben werden. Die Bohrspülungen enthalten zudem suspendierten Ton und weitere Additive, die zur Steuerung der Eigenschaften der Bohrflüssigkeit verwendet werden.

Die Verbindungen der Formel (I) sind bekannt und werden heute hauptsächlich als textilweichmachende Komponenten oder zur antistatischen Ausrüstung von Geweben verwendet. Beispiele für Verbindungen der Formel (I) in der R⁴ für einen Rest der Formel (II) steht, finden sich in den Dokumente WO 94/06899 und DE 42 03 489 A1 der Anmelderin, welche Diesteraminverbindungen in weichpflegenden Mitteln für Textilien offenbaren. Auch die EP 239 910 A2 beschreibt textilpflegende Mittel, die gut biologisch abbaubare quaternierte Mono- und Diesteraminverbindungen enthalten. Aus der Literatur ist zudem bekannt, daß sich derartige Ammoniumverbindungen durch eine gute biologische Abbaubarkeit auszeichnen (Hauswirtschaft und Wissenschaft, 42. Jahrgang, Heft 2, 1994, Seiten 72-74 und S.T. Giolando et. al, Chemosphere, Vol. 30, No. 6, Seiten 1067-1083, 1995).

Verbindungen der Formel (I) in denen R⁴ für einen Rest der Formel (III) steht werden in der DE 195 03 277 C1 beschrieben. Diese Verbindungen zeigen eine gute biologische Abbaubarkeit und werden aufgrund ihrer avivierenden und antistatischen Wirkung als Faser- und Textilhilfsmittel und in der Haarkosmetik eingesetzt. Die korrosionsinhibierenden Eigenschaften dieser Substanzen werden aber in keiner der oben genannten Schriften erwähnt oder nahegelegt.

Im erfindungsgemäßen Verfahren werden vorzugsweise Verbindungen der Formel (I) verwendet, in der R⁴ einen Rest der Formel (II) bedeutet. Diese Substanzen stellen technisch quaternierte Mono-, Di- oder Trifettsäureaminesterverbindungen dar, die durch bekannte Synthesemethoden gewonnen werden können. Üblicherweise werden Verbindungen, die ein, vorzugsweise aber zwei Fettsäureesterguppen enthalten, verwendet. Die quaternierten Verbindungen können z.B. durch Veresterung von tertiären Mono- Di- oder Trialkanolaminen, vorzugsweise Triethanol- oder Triisopropanolamin mit Fettsäurechloriden und anschließender Quaternierung der gebildeten Ester mit Methylchlorid, Benzylchlorid oder Dimethylsulfat erhalten werden. Zur Herstellung dieser kationischen Esteraminverbindungen sei hier nur exemplarisch auf die EP 293 955 A2 und die EP 293 953 A2 verwiesen.

Neben den bevorzugt verwendeten Verbindungen der Formel (I) in der R⁴ für einen Rest der Formel (II) steht, können auch Verbindungen mit zwei quaternierten Stickstoffatomen pro Molekül gemäß Formel (I) in der R⁴ für einen Rest der Formel (III) steht, verwendet werden. Bevorzugt werden dabei solche Verbindungen eingesetzt, deren Gruppe Z für eine Dimerfettsäuregruppe der Formel (IV) steht.

Die Synthese dieser Substanzen erfolgt beispielsweise gemäß der Lehre der DE 195 03 277 C1. Dazu werden tertiäre Aminen der Formel (V) 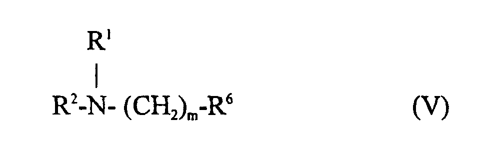 in der R⁶ für eine NH₂ oder OH-Gruppe steht und R¹, R² und m die oben genannte Bedeutung haben, mit Dimerfettsäuren mit durchschnittlich 36 bis 54 Kohlenstoffatomen kondensiert und die so erhaltenen Dimerfettsäureester bzw. -amide anschließend mit bekannten Alkylierungsreagenzien, wie beispielsweise Dimethylsulfat oder Dimethylcarbonat zu den erfindungsgemäß verwendeten Verbindungen der Formel (I) in der R⁴ für einen Rest der Formel (III) und Z für eine Gruppe der Formel (IV) steht, quaterniert.

Unter dem Begriff Dimerfettsäuren werden oligomere Fettsäuren verstanden, die in an sich bekannter Weise durch thermische oder katalytische Oligomerisierung von ungesättigten Fettsäuren, beipsielsweise Ölsäure oder Erucasäure bzw. technischer Fettsäuregemischen mit Iodzahlen im Bereich von 45 bis 115 erhalten werden können. Im Verlauf der Dimerisierung, die eine elektrocyclische En-Reaktion darstellt, kommt es zur Verknüpfung von zwei, in untergeordeten Mengen auch drei Fettsäuren unter Ausbildung eines ungesättigten, jedoch üblicherweise nicht-aromatischen Ringsystems.

Vorzugsweise werden bei der Synthese dieser Verbindungen als tertiäre Amine N,N-Dimethylaminopropylamin oder N,N-Dimethylaminopropanol und als bevorzugte Dimerfettsäuren Oligomerisierungssprodukte von technischer Ölsäure eingesetzt. Dabei ist es bevorzugt ein molares Verhältnis zwischen Amin und Dimerfettsäure von 1 : 1,5 bis 1 : 2,2 gemäß der Lehre der DE 195 03 277 einzustellen.

Weiterhin können Verbindungen der Formel (I) verwendet werden, in denen der Rest R⁴ für eine Gruppe der Formel (III) steht, in der Z eine Methylengruppe -(CH₂)ₘ-, vorzugsweise eine Polymethylengruppe mit 6 C-Atomen bedeutet. Dabei sind solche Verbindungen bevorzugt, bei denen beide quaternierten Stickstoffatome jeweils zwei Ester-Reste der Formel (II) tragen. Diese Verbindungen werden hergestellt indem man ein Alkyldiamin, vorzugsweise Hexamethylendiamin erst in üblicher Weise mit Ethylenoxid umsetzt, anschließend das Reaktionsprodukt mit einer Carbonsäure verestert und den Ester mit geeigneten Verbindungen, z. B. Dimethylsulfat quaterniert.

Der Alkylrest R⁵ gemäß Formel (II) der im erfindungsgemäßen Verfahren verwendeten Verbindungen der Formel (I) ist vorzugsweise geradkettig und enthält zwischen 7 und 23 C-Atomen. Dabei sind Reste mit 7 bis 21 Kohlenstoffatomen bevorzugt. Der Alkylrest kann gesättigt und ungesättigt sein, wobei im Falle von ungesättigten Resten 1, 2 oder 3 Doppelbindungen enthalten sein können, vorzugsweise aber nur 1 Doppelbindung.

Besonders bevorzugt ist ein Verfahren, in dem Verbindungen der Formel (I) verwendet werden, bei denen die Estergruppen durch Veresterung von Fettsäuremischungen, vorzugsweise Palm-, Raps- oder Kokosfettsäuren, erhalten werden. Weitere geeignete Fettsäuren sind beispielsweise Capryl-, Caprin-, Laurin-, Myristin-, Palmitin- und Stearinsäuren sowie ungesättigte Säuren wie Öl-, Eruca-, Linol- oder Linolensäure, Behensäure oder Mischungen dieser Verbindungen. Ebenfalls bevorzugt ist die Verwendung von Verbindungen, bei denen einer der Reste R¹ bis R³ ein Hydroxyalkylrest, vorzugsweise mit 2 bis 4 C-Atomen und/oder einen Aryl- oder Alkylarylrest insbesondere mit 6 bis 12, C-Atomen und vorzugsweise einen Benzylrest, darstellt.

Bevorzugt ist es weiterhin, im erfindungsgemäßen Verfahren Verbindungen der Formel (I) zu verwenden, in denen auch einer oderer mehrere der Reste R¹, R² oder R³ für einen Rest der Formel (II) steht.

Die Anionen A- der im erfindungsgemäßen Verfahren verwendeten Verbindungen der Formel (I) werden durch das bei der Synthese eingesetzte Quaternierungsreagenz, wie Methylchlorid, Benzylchlorid oder Dimethylsulfat, bestimmt. Vorzugsweise sind die Anionen ausgewählt aus der Gruppe der Halogenide, Methosulfat und Methophosphat.

Die Verbindungen gemäß Formel (I) können in dem erfindungsgemäßen Verfahren verwendet werden, indem sie dem zu behandelnden Medium in wirksamen Mengen zugegeben werden. Dabei können auch Mischungen von Verbindungen der Formeln (I) verwendet werden oder Mischungen mit anderen bekannten Inhibitoren wie beispielsweise N-Alkylbetaine, N-Alkylimidazoline, polyalkoxylierte Amine, Amide und Imidazoline oder Phosphorsäureester. Das Verfahren wird vorzugsweise so gestaltet, daß die Verbindungen der Formel (I) in solchen Mengen zugegeben werden, daß deren Konzentration, bezogen auf die Gesamtmenge des Mediums, zwischen 5 und 1000 ppm beträgt.

Bevorzugt sind solche Verfahren, bei denen die Verbindungen der Formel (I) in Form wäßriger Lösungen verwendet werden. Diese Lösungen enthalten die Verbindungen der Formel (I) vorzugsweise in Mengen zwischen 5 und 50 Gew.-% und insbesondere zwischen 10 bis 30 Gew.-%, bezogen auf das Gesamtgewicht der Lösungen. Zusätzlich können die Lösungen auch noch Alkohole, vorzugsweise solche mit 1 bis 6 C-Atomen, wie Isopropanol, Ethylenglykol oder Propylenglykol oder deren Mischungen in Mengen zwischen 5 und 30 Gew.-%, bezogen auf die Menge der wäßrigen Lösungen, enthalten.

Neben den bereits genannten Inhaltsstoffen können die wäßrigen Lösungen noch weitere Additive enthalten. Dazu zählen beispielsweise Emulgatoren, wie Fettamine oder Dimer- oder Trimerfettsäuren und H₂S- oder O₂-Scavenger, wie Natriumthiosulfat oder Natriumhydrogensulfit. Diese Additive werden den Lösungen in üblichen Mengen, das heißt zwischen 1 und 10 Gew.-%, zugegeben.

Weiterhin kann es auch bevorzugt sein, im erfindungsgemäßen Verfahren die Verbindungen der Formel (I) in Form einer Lösung in einem nichtwäßrigen Lösungsmittel, welches ausgewählt ist aus bei Raumtemperatur flüssigen aliphatischen oder aromatischen Kohlenwasserstoffen zu verwenden, wobei die Lösungen die Verbindungen der Formel (I) in Mengen zwischen 5 und 50 Gew.-%, vorzugsweise in Mengen zwischen 10 und 30 Gew.-%, enthalten.

Geeignete Kohlenwasserstoffe sind beispielsweise Benzin, bei Raumtemperatur flüssige Paraffine oder Aromaten, wie Toluol, Xylol oder Diethylbenzol, beziehungsweise Mischungen dieser Verbindungen.

Es hat sich als vorteilhaft erwiesen, im erfindungsgemäßen Verfahren die nichtwäßrigen Lösungsmitteln in Abmischung mit kurzkettigen C₁-C₈-Alkoholen zu verwenden, wobei das Gewichtsverhältnis von nichtwäßrigem Lösungsmittel zu Alkohol zwischen 1:10 und 10:1 und insbesondere zwischen 4:1 und 1:4 liegt. Geeignete Alkohole sind beispielsweise Ethanol, Propanol, Isopropanol, 2-Ethylhexanol oder Glykole, wie zum Beispiel Ethylen- oder Butylenglykol, beziehungsweise Mischungen dieser Substanzen. Es ist aber auch möglich die Verbindungen der Formel (I) in rein alkoholischen Lösung zu verwenden. Weiterhin können Lösungen der Verbindung (I) in nichtwäßrigen Lösungsmittel noch weitere geeignete Additive, beispielsweise H₂S- oder O₂-Scavenger enthalten.

Wird das erfindungsgemäße Verfahren zum Schutz von Metalle, die gasförmige Medien ausgesetzt sind verwendet, werden die Verbindungen der Formel (I) in Form wäßriger oder nichtwäßriger Lösungen als Aerosol in dem gasförmigen Medium versprüht.

Ein weiterer Gegenstand der vorliegenden Erfindung betrifft die Verwendung von Verbindungen der Formel (I) als Korrosionsinhibitoren für Metalle in flüssigen wäßrigen bzw. nicht wäßrigen oder gasförmigen Medien.

Die Verwendung ist dabei nicht auf die Erdöl- oder Erdgasproduktion (beispielsweise als Additiv zu Bohrspülungen oder als Korrosionsinhibitor für Pipelines und andere Rohrleitungen) beschränkt,-vielmehr eignen sich die Verbindungen der Formel (I) generell zur Verwendung als Korrosionsinhibitoren für metallische Oberflächen, vorzugsweise solchen aus Stahl.

### Beispiele

### Beispiel 1

Zur Bestimmung der korrosionsinhibierenden Eigenschaften wurde ein sogenannter "Wheel-Test" durchgerührt. Bei diesem Coupon-Test wird der Massenabtrag durch Korrosion von inhibierten Systemen gegenüber dem Massenabtrag bei nicht-inhibierten Systemen ermittelt.

Dazu wurden Stahlcoupons (Mild Steel 1018, sandgestrahlt) mit Aceton entfettet und gewogen und anschließend in eine korrosives Medium getaucht und 72 Stunden bei 60 °C drehend (60 Upm) gelagert. Als korrosives Medium diente eine Mischung aus einer salzhaltigen wäßrigen Phase (5 Gew.-% NaCl, 0,5 Gew.-% Essigsäure) und Benzin (Siedebereich bei Normaldruck 145-200 °C), wobei die Mischung mit CO₂ und H₂S gesättigt wurde. Das Mischungsverhältnis (v/v) Wasser / Benzin betrug 50 : 50.

Die inhibierenden Substanzen wurden in Form einer 30 Gew.-%igen wäßrigen Lösung eingesetzt. Die Konzentration betrug jeweils 30 ppm (bezogen auf die Menge des korrosiven Mediums).

Anschließend wurden die Coupons mit einer Aceton/Isopropanol-Mischung (50 : 50, v/v) gewaschen und getrocknet und erneut gewogen. Aus der Massendifferenz der Coupons vor und nach der Behandlung im korrosiven Medium wurde die Schutzwirkung im Vergleich zu nichtinhibiert gelagerten Coupons ermittelt. Einem Massenverlust von 0 mg entspricht eine Schutzwirkung von 100 %.

In der Tabelle 1 sind diese Werte für die erfindungsgemäßen Inhibitoren 1 bis 5, sowie als Vergleich der Wert eines herkömmlichen Betain-Inhibitors aufgeführt.

Die erfindungsgemäßen Inhibitoren 1 bis 5 zeigen dabei klar eine wesentlich höhere Schutzwirkung.

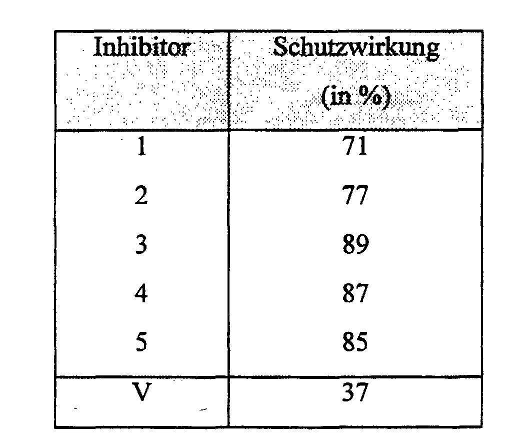

Zusammensetzung der Inhibitoren:
1: Methyl-N,N-bis(Kokos-oxyethyl)-N-(2-hydroxyethyl)ammoniummethosulfat
2: N,N,N-trimethyl-N-(Kokos-oxyethyl)ammonium-methosulfat
3: N,N-dimethyl-N-benzyl-N-(Kokos-oxyethyl)ammonium-chlorid
4: N,N,N-trimethyl-N-(Palm-oxyethyl)ammonium-methosulfat
5: N,N-dimethyl-N-benzyl-N-(Palm-oxyethyl)ammonium-chlorid
V: N,N-dimethyl-N-(Kokos-amido-propyl)-N-acetyl-betain

### Beispiel 2

Neben den reinen Inhibitoren wurden auch Mischungen untersucht, die zusätzliche Additive, welche beim Einsatz beispielsweise in der Erdölindustrie benötigt werden, enthielten. Derartige Mischungen stellen gebrauchsfertige Formulierungen für die Verwendung unter üblichen Einsatzbedingungen, beispielsweise beim Bohren oder Fördern von Erdöl oder Erdgas dar. Die Mittel wurden gemäß dem oben beschriebenen Wheel-Test geprüft, als korrosives Medium wurde eine Mischung wie unter 1, die aber ein Wasser / Benzin-Verhältnis (v/v) von 10:90 aufwies, verwendet. (Ergebnisse siehe Tabelle 2). Die Mischungen enthielten 20 Gew.-% Inhibitor, 10 Gew.-% Isopropanol als Co-Lösungsmittel, 2 Gew.-% eines mit 12 Mol Ethylenoxid umgesetzten Kokosfettamins, 2 Gew.-% Trimertallölfettsäure, 2 Gew.-% Natriumthiosulfat als H₂S-Scavenger und den Rest Wasser. Als Inhibitoren wurden die o.g. Verbindungen 3 und 4 eingesetzt.

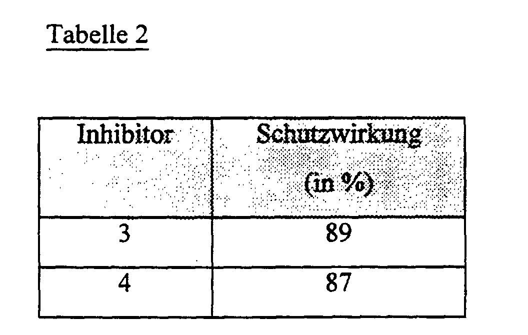

### Beispiel 3

Die Inhibitoren 2 bis 5 wurden in einem Lösungsmittelgemisch aus 40 Gew.-% Isopropanol und 60 Gew.-% aromatischer Kohlenwasserstoffe (Solvesso 150® , Fa. Exxon) gelöst. Die Lösungen enthielt jeweils 25 Gew.-% des Inhibitors. Diese Lösungen wurden im oben beschriebenen Wheel-Text geprüft (Konzentration der Inhibitoren, bezogen auf das korrosive Medium, 10 ppm):

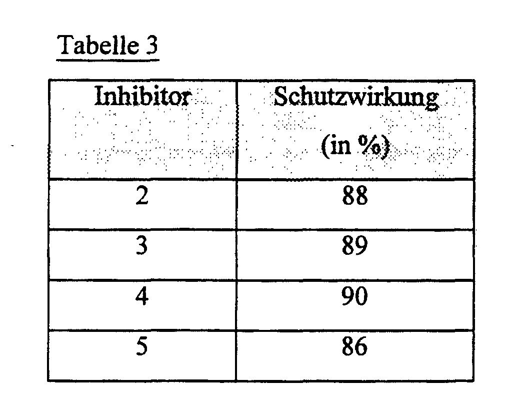

### Beispiel 4

Weiterhin wurden die zwei erfindungsgemäßen Korrosionsinhibitoren 6 und 7 gemäß den Bedingungen des Beispiels 3 im Wheel-Test untersucht. Das Volumenverhältnis Wasser zu organischer Phase betrug 90 zu 10. Die organische Phase bestand zu gleichen Volumenteilen aus Isopropanol und Solvesso® 150.
Der Inhibitor 6 wurde hergestellt, indem man zunächst 436 g Hexamethylendiamin (3,8 mol) mit 995 g Ethylenoxid (22,6 mol) ohne Katalysator bei 120 - 130°C und einem Druck von 1 bar umsetzt.
410 g (1,3 mol) dieses ethoxylierten Hexamethylendiamins wurden mit 590 g Stearinsäure (2,1 mol) und 1,5 g Phosphinsäure bei 170°C und einem Druck von 0,4 bar verestert, bis die Säurezahl des Produkts auf einen Wert von < 5 gefallen war.
795 g des Esters wurden anschließend mit 500 g Isopropylalkohol vermischt, auf 60°C erhitzt und dann zur Quaternierung 213 g (2 mol) Dimethylsulfat zugegeben. Die Mischung wurde dann über 4 Stunden auf 80°C erhitzt und anschließend das Produkt als hellgelbe Paste erhalten.
Der Inhibitor 7 ist ein handelsübliches Dimerfettsäureamidoamin (Empol 1014 der Fa. Henkel), welches mit Dimethylsulfat quaterniert wurde.

Die Ergebnisse sind Tabelle 4 zu entnehmen:

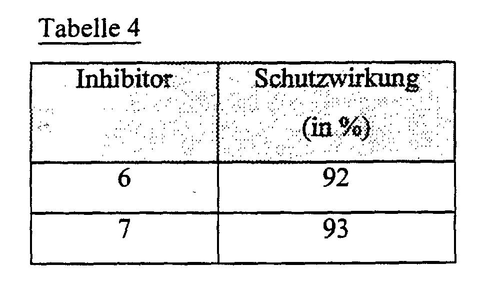

Die Ergebnisse dieser Tests zeigen, daß auch die gebrauchsfertig formulierten Mischungen ihre hohe Schutzwirkung beibehalten.

## Patentansprüche

1. Verfahren zum Schutz von Metalloberflächen gegen Korrosion in flüssigen wäßrigen beziehungsweise nichtwäßrigen oder gasförmigen Medien, dadurch gekennzeichnet, daß den Medien Verbindungen der Formel (I) zugegeben werden, 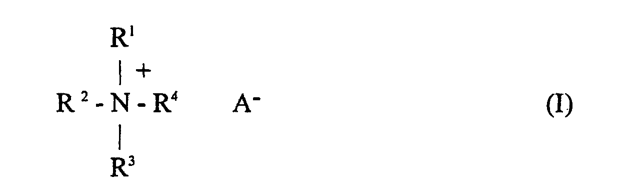 wobei die Reste R¹, R² und R³ unabhängig voneinander für einen Alkyl- oder Hydroxyalkylrest mit 1 bis 4 C-Atomen, einen Aryl- oder Alkylarylrest oder einen Rest der Formel (II) stehen, 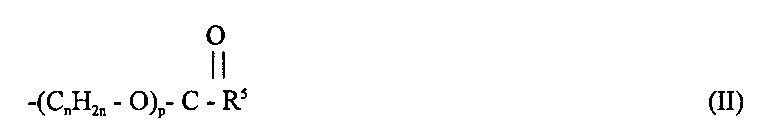 A⁻ ein Anion ist, n eine Zahl von 2 oder 3, p eine Zahl von 1 bis 3 und R⁵ für einen Alkyl- oder Alkenylrest mit 7 bis 23 C-Atomen und 0, 1, 2 oder 3 Doppelbindung steht,
und R⁴ für einen Rest der Formeln (II) oder (III) steht 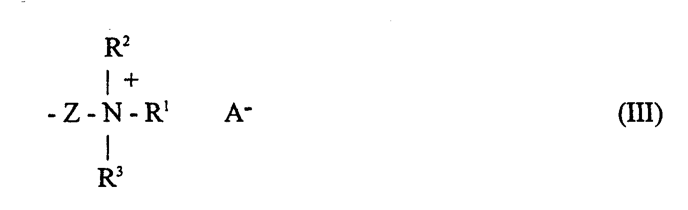 in der R¹, R² und R³ die obige Bedeutung haben und Z für eine Gruppe -(CH₂)ₘ- oder eine Gruppe der Formel (IV) steht 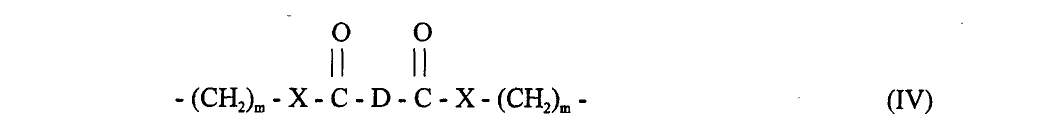 und m für eine ganze Zahl zwischen 1 und 6, X für eine Gruppe NH oder für Sauerstoff steht und D einen Dimerfettsäurerest mit durchschnittlich 36 bis 54 C-Atomen bedeutet.

2. Verfahren nach Anspruch 1, dadurch gekennzeichnet, daß Verbindungen der Formel (I) verwendet werden, in der R⁴ für einen Rest der Formel (II) steht.

3. Verfahren nach Anspruch 1 oder 2, dadurch gekennzeichnet, daß Verbindungen der Formel (I) verwendet werden, in der R¹, R² oder R³ für einen Rest der Formel (II) steht.

4. Verfahren nach einem der Ansprüche 1 bis 3, dadurch gekennzeichnet, daß Verbindungen der Formel (I) verwendet werden, bei denen die Anionen ausgewählt sind aus der Gruppe Halogenid, Methosulfat und Methophosphat.

5. Verfahren nach einem der Ansprüche 1 bis 4, dadurch gekennzeichnet, daß die Verbindungen der Formel (I) den flüssigen wäßrigen beziehungsweise nichtwäßrigen oder gasförmigen Medien in solchen Mengen zugegeben werden, daß die Konzentration dieser Verbindungen, bezogen auf die Gesamtmenge der Medien, zwischen 5 und 1000 ppm beträgt.

6. Verfahren nach einem der Ansprüche 1 bis 5, dadurch gekennzeichnet, daß die Verbindungen der Formel (I) in Form einer wäßrigen Lösung eingesetzt werden, die zwischen 5 und 50 Gew.-%, vorzugsweise zwischen 10 und 30 Gew.-% an Verbindungen der Formel (I) enthält.

7. Verfahren nach Anspruch 6, dadurch gekennzeichnet, daß die wäßrige Lösung Isopropanol, Ethylenglykol oder Propylenglykol oder deren Mischungen in Mengen zwischen 5 und 30 Gew.-%, bezogen auf die Menge der wäßrige Lösung, enthält.

8. Verfahren nach einem der Ansprüche 1 bis 5, dadurch gekennzeichnet, daß die Verbindungen der Formel (I) in Form einer Lösung in einem nichtwäßrigen Lösungsmittel, ausgewählt aus bei Raumtemperatur flüssigen aliphatischen oder aromatischen Kohlenwasserstoffen eingesetzt werden, und die Lösungen zwischen 5 und 50 Gew.-%, vorzugsweise zwischen 10 und 30 Gew.-% an Verbindungen der Formel (I) enthalten.

9. Verfahren nach Anspruch 8, dadurch gekennzeichnet, daß die Lösungen C₁-C₈-Alkohole enthalten.

10. Verfahren nach einem der Ansprüche 8 oder 9, dadurch gekennzeichnet, daß das Gewichtsverhältnis von nichtwäßrigem Lösungsmittel zu Alkohol zwischen 1:10 und 10:1 und vorzugsweise zwischen 1:4 und 4:1 beträgt.

11. Verwendung von Verbindungen der Formel (I) gemäß Anspruch 1 zum Schutz von Metalloberflächen gegen Korrosion in flüssigen wäßrigen bzw. nicht wäßrigen oder gasförmigen Medien.

## Claims

1. A process for protecting metal surfaces against corrosion in liquid aqueous or non-aqueous or gaseous media, characterized in that compounds corresponding to formula (I): 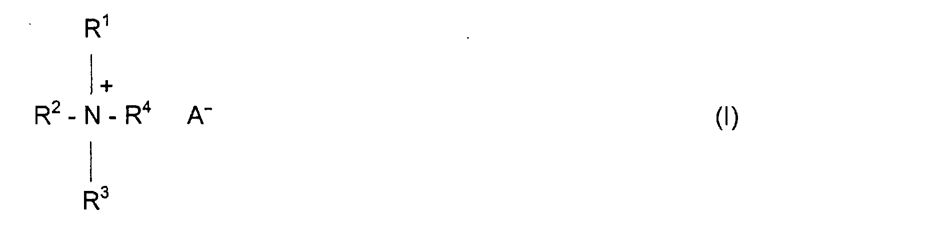 in which R¹, R² and R³ independently of one another represent an alkyl or hydroxyalkyl group containing 1 to 4 carbon atoms, an aryl or alkylaryl group or a group corresponding to formula (II): 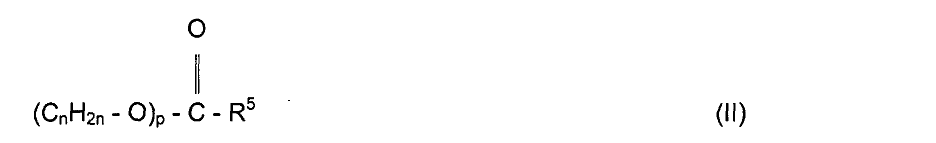 A- is an anion, n is the number 2 or 3, p is a number of 1 to 3 and R⁵ is an alkyl or alkenyl group containing 7 to 23 carbon atoms and 0, 1, 2 or 3 double bonds,
and R⁴ is a group corresponding to formula (II) or (III): 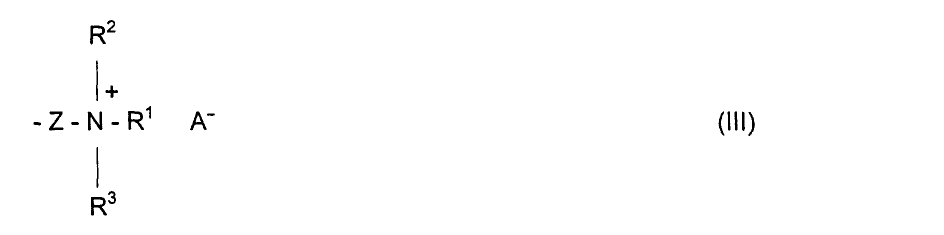 where R¹, R² and R³ are as defined above and Z is a group -(CH₂)ₘ- or a group corresponding to formula (IV): 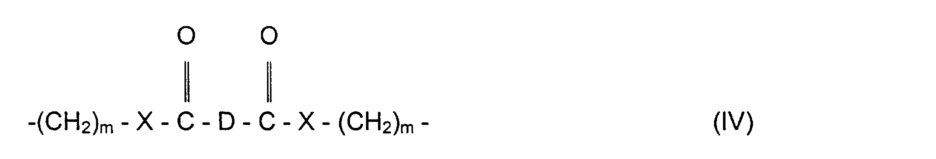 and m is an integer of 1 to 6, X is a group NH or an oxygen atom and D is a dimer fatty acid residue containing on average 36 to 54 carbon atoms, are added to the media.

2. A process as claimed in claim 1, characterized in that compounds of formula (I) where R⁴ is a group corresponding to formula (II) are used.

3. A process as claimed in claim 1 or 2, characterized in that compounds of formula (I) where R¹, R² or R³ is a group corresponding to formula (II) are used.

4. A process as claimed in any of claims 1 to 3, characterized in that compounds of formula (I) where the anions are selected from the group consisting of halide, methosulfate and methophosphate are used.

5. A process as claimed in any of claims 1 to 4, characterized in that the compounds of formula (I) are added to the liquid, aqueous or non-aqueous or gaseous media in such quantities that the concentration of these compounds, based on the total quantity of media, is between 5 and 1,000 ppm.

6. A process as claimed in any of claims 1 to 5, characterized in that the compounds corresponding to formula (I) are used in the form of an aqueous solution containing between 5 and 50% by weight and preferably between 10 and 30% by weight of compounds corresponding to formula (I).

7. A process as claimed in claim 6, characterized in that the aqueous solution contains isopropanol, ethylene glycol or propylene glycol or mixtures thereof in quantities of 5 to 30% by weight, based on the quantity of aqueous solution.

8. A process as claimed in any of claims 1 to 5, characterized in that the compounds of formula (I) are used in the form of a solution in a non-aqueous solvent selected from aliphatic or aromatic hydrocarbons liquid at room temperature and the solutions contain between 5 and 50% by weight and preferably between 10 and 30% by weight of compounds corresponding to formula (I).

9. A process as claimed in claim 8, characterized in that the solutions contain C₁₋₈ alcohols.

10. A process as claimed in claim 8 or 9, characterized in that the ratio by weight of non-aqueous solvent to alcohol is between 1:10 and 10:1 and preferably between 1:4 and 4:1.

11. The use of compounds corresponding to formula (I) according to the claim 1 for protecting metal surfaces against corrosion in liquid aqueous or non-aqueous or gaseous media.

## Revendications

1. Procédé de protection des surfaces métalliques contre la corrosion en milieux liquides aqueux ou selon les cas non aqueux ou gazeux,
caractérisé en ce qu'
on ajoute aux milieux des composés de formule (I), 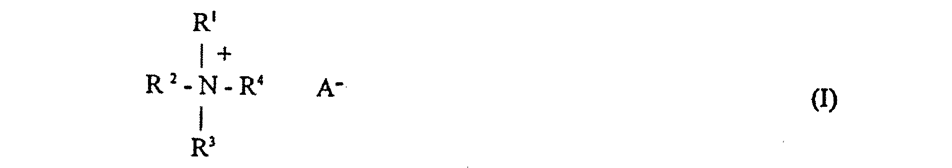 dans laquelle les radicaux R¹, R² et R³ représentent indépendamment l'un de l'autre un radical alkyle ou hydroxyalkyle comportant de 1 à 4 atomes de carbone, un radical aryle ou alkylaryle ou un radical de formule (II) 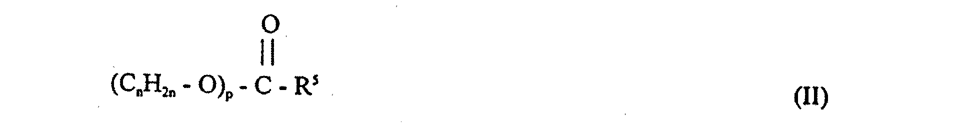 A⁻ est un anion, n est un nombre égal à 2 ou 3, p est un nombre allant de 1 à 3 et R⁵ représente un radical alkyle ou alcényle ayant de 7 à 23 atomes de carbone et 0, 1, 2 ou 3 doubles liaisons,
et R⁴ représente un radical de formules (II) ou (III) 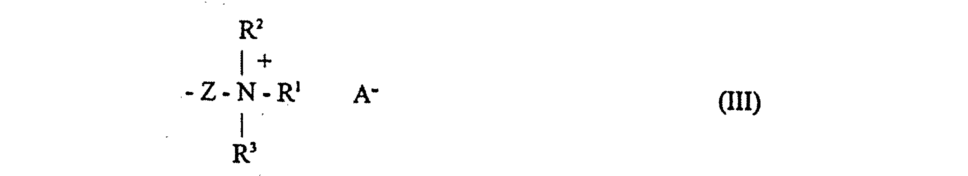 dans lesquelles R¹, R² et R³ ont la signification donnée ci-dessus et Z représente un groupe -(CH₂)ₘ₋ ou un groupe de formule (IV) 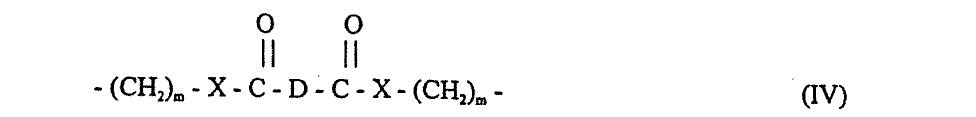 et m représente un nombre entier compris entre 1 et 6, X représente un groupe NH ou un atome d'oxygène et D un radical acide gras dimère ayant en moyenne de 36 à 54 atomes de carbone.

2. Procédé selon la revendication 1,
caractérisé en ce qu'
on utilise des composés de formule (I) dans laquelle R⁴ représente un radical de formule (II).

3. Procédé selon la revendication 1 ou 2,
caractérisé en ce qu'
on utilise des composés de formule (I) dans laquelle R¹, R² ou R³ représentent un radical de formule (II).

4. Procédé selon l'une des revendications 1 à 3,
caractérisé en ce qu'
on utilise des composés de formule (I) dans lesquels les anions sont choisis dans le groupe constitué par l'halogénure, le méthosulfate et le méthophosphate.

5. Procédé selon l'une des revendications 1 à 4,
caractérisé en ce qu'
on ajoute les composés de formule (I) aux milieux liquides aqueux ou selon les cas non aqueux ou gazeux à des quantités telles que la concentration de ces composés, par rapport à la quantité totale des milieux, s'établit entre 5 et 1000 ppm.

6. Procédé selon l'une des revendications 1 à 5,
caractérisé en ce qu'
on utilise les composés de formule (I) sous la forme d'une solution aqueuse qui contient entre 5 et 50 % en poids, de préférence entre 10 et 30 % en poids, de composés de formule (I).

7. Procédé selon la revendication 6,
caractérisé en ce que
la solution aqueuse contient de l'isopropanol, de l'éthylène glycol ou du propylène glycol, ou leurs mélanges, à des quantités comprises entre 5 et 30 % en poids par rapport à la quantité de la solution aqueuse.

8. Procédé selon l'une des revendications 1 à 5,
caractérisé en ce qu'
on utilise les composés de formule (I) sous la forme d'une solution aqueuse dans un solvant non aqueux, choisi parmi les hydrocarbures aliphatiques ou aromatiques liquides à la température ambiante, et les solutions contiennent entre 5 et 50 % en poids, de préférence entre 10 et 30 % en poids de composés de formule (I).

9. Procédé selon la revendication 8,
caractérisé en ce que
les solutions contiennent des alcools en C₁ à C₈.

10. Procédé selon l'une des revendications 8 ou 9,
caractérisé en ce que
le rapport pondéral du solvant non aqueux à l'alcool s'établit entre 1:10 et 10:1 et de préférence entre 1:4 et 4:1.

11. Utilisation de composés de formule (I) selon la revendication 1, pour la protection des surfaces métalliques contre la corrosion dans les milieux liquides, aqueux ou selon les cas non aqueux, ou gazeux.
